# FASCICULE DE BREVET EUROPEEN

(11) **EP 0 249 974 B1**
(45) Date de publication et mention de la délivrance du brevet: **15.03.1995**
(21) Numéro de dépôt: 87108731.8
(22) Date de dépôt: 17.06.1987
(51) Int. Cl.: G07F 5/18, G07F 9/02

(54) **Système de contrôle de présence d'articles dans des appareils de vente à accès manuel libre**
System zur Anwesenheitsprüfung von Artikeln in frei zugänglichen Verkaufsapparaten
Article presence checking system for a free-access vending machine

(30) Priorité: 20.06.1986 BE 904969
(43) Date de publication de la demande: 23.12.1987
(73) Titulaire: Staar Development Company -S.A., B-1050 Bruxelles (BE)
(72) Inventeur: Staar, Marcel, Jules, Hélène, B-1050 Bruxelles (BE)
(74) Mandataire: Splanemann, Rainer

(56) Documents cités:
- GB-A- 1 536 533
- GB-A- 2 071 384
- GB-A- 2 101 982
- GB-A- 2 135 292
- US-A- 3 884 386

## Description

Il existe sur le marché des appareils automatiques, semi-automatiques ou d'accès manuel direct pour la vente d'articles tels que boissons, biscuits, articles de toilette etc.., principalement dans des chambres d'hotel, afin d'offrir un service immédiat et sans interruption, 24 heures sur 24.

Ces appareils peuvent être très simples, les clients pouvant prendre n'importe quel article stockés en vrac dans une armoire ou un petit réfrigérateur, et remplir eux-mêmes une fiche pour établir la liste des différents achats, lesquels seront ultérieurement portés sur la note.

D'autres appareils, plus automatisés, permettent de choisir des articles stockés dans des cases ou alvéoles individuelles, et lorsqu'un article est extrait de son emplacement, le casier se referme, ne permettant pas la réintroduction d'un article préalablement enlevé, et l'opération est enregistrée automatiquement sur un ordinateur de facturation qui débitera l'achat sur la note ou le compte du client.

C'est une contrainte désagréable pour le client de devoir s'occuper de remplir une fiche, et des erreurs peuvent facilement s'y glisser.

C'est une contrainte également de ne pas pouvoir remettre un article non employé dans l'appareil si le client change entretemps d'avis.

Dans le brevet GB -1 536 533 des moyens sont proposés pour réaliser un appareil de vente dans lequel des articles différents sont maintenus dans des emplacements individuels, équipés de moyens de détection. Quand un article est retiré de son emplacement, une pièce mécanique est libérée et verrouillée pour empêcher qu'un article ne puisse être réintroduit dans son emplacement, les informations provenant des moyens de détection peuvent être interprétées par un ordinateur pour contrôler le stock et pour la facturation.

Dans le brevet GB 2-135 292 des moyens ont été proposés pour réaliser un appareil de vente composé de couloirs multiples adaptés pour stocker différents articles et munis de portes transparentes, lesquelles, lorsque placées dans une position permettant le retrait d'un article, agissent sur des interrupteurs permettant chaque fois l'enregistrement d'une vente laquelle est communiquée à un ordinateur pour contrôler le stock et pour la facturation. Des fibres optiques sont prévues pour connecter des capteurs optiques à d'autres éléments de l'appareil.

Dans le brevet USA - 3.884 386 il est proposé un appareil de vente d'articles stockés en rangées multiples dans lesquelles un obstacle mécanique doit être écarté pour pouvoir retirer un article choisi, des moyens sont prévus pour que la manoeuvre d'enlèvement d'un article agit chaque fois sur un interrupteur qui permet d'enregistrer, par un ordinateur, la vente d'un article pour contrôler le stock et pour la facturation.

Le but de la présente invention est de proposer des moyens pour détecter automatiquement la présence ou non d'articles stockés dans des armoires de vente.

Un autre but est de proposer un système qui permette à tout moment un inventaire pour le réapprovisionnement des articles vendus et pour la facturation de ceux-ci.

Un autre but est de proposer un système qui ne nécessite pas des mécanismes rébarbatifs, onéreux et peu esthétiques.

Un autre but est de proposer un système dans lequel les articles sont simplement déposés à leurs emplacements.

Un autre but est de proposer un système qui puisse être interrogé à tout moment sur des paramètres concernant le bon fontionnement de l'appareil tels que, la température intérieure du réfrigérateur, la bonne fermeture de la porte, l'état des circuits électroniques, etc..

Afin de réaliser ces buts, on propose essentiellement de surveiller chaque emplacement réservé aux articles au moyen de contacteurs ou interrupteurs optiques.

Des moyens sont prévus pour éviter que poussières, fragments quelconques ou rayons incidents ne puissent influencer le fontionnement des contacteurs optiques.

Des moyens sont prévus pour réaliser des emplacements d'une certaine flexibilité pouvant servir à des articles de formes et grandeurs différentes.

Des moyens sont prévus pour réaliser des racks ou plateaux amovibles, de plusieurs emplacements groupés, afin de pouvoir changer rapidement un ensemble adapté à d'autres articles.

Afin de bien faire comprendre l'invention on donnera ci-après des exemples non-limitatifs.

La FIG. I représente un réfrigérateur I dans lequel sont prévus des emplacements adaptés aux articles présentés à la vente, par exemple des emplacements 2 pour des paquets de biscuits, des emplacements 3 pour des bouteilles 4 et des emplacements 5 pour des bouteilles ou cartons de lait ou jus de fruits 6.

La réfrigération est réalisée par des moyens classiques très connus, non représenté.

Chaque emplacement est equipé d'un interrupteur optique composé d'un émetteur de rayons infra-rouges 7 et d'un récepteur 8.

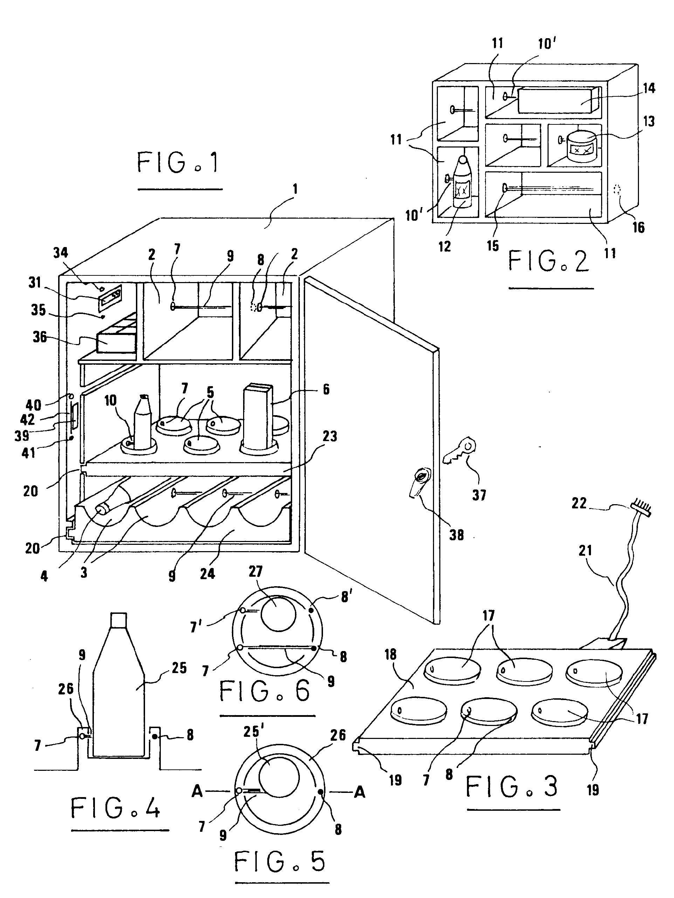

Lorsque l'émetteur 7 est alimenté, le faisceau de rayons infra-rouges 9 peut arriver au récepteur 8, ou être interrompu par un article se trouvant dans l'emplacement, comme en I0, FIG. I, ou I0′, FIG. 2.

La FIG. 2 donne un exemple d'armoire non-réfrigérée, par exemple pour des articles ou produits de toilette.

Des emplacements ou casiers II peuvent recevoir des flacons, des pots et des boîtes I2-I3-I4, et chaque emplacement est surveillé par un contacteur optique I5-I6.

Les casiers sont conçus pour que les formes et les dimensions d'un article forcent celui-ci à interrompre le faisceau de rayons infra-rouges lorsqu'il se trouve dans son emplacement réservé.

La FIG. 3 montre que plusieurs emplacements I7 peuvent être groupés sur une pièce en forme de plateau mobile I8, lequel est muni de rebords guides I9 pouvant s'engager dans des rainures 20 prévues dans les parois du réfrigérateur I.

Les contacteurs optiques sont raccordés aux circuits de l'appareil par des fils électriques 2I et une fiche 22.

On voit donc que l'on peut aisément extraire un plateau 23 ou 24 et le remplacer par un plateau I8.

La FIG. 4 est une coupe des vues en plan 5 et 6, suivant A-A, et représente un emplacement pour une bouteille 25.

Le bord 26 limite la position de la bouteille qui se place dans le faisceau 9 généré par l'émetteur 7 dirigé vers le récepteur 8.

La FIG. 5 montre qu'un même emplacement peut servir à une bouteille d'un diamètre assez grand comme en 25 FIG. 4, mais aussi pour une bouteille d'un diamètre plus petit, comme en 25′, FIG. 5.

Si l'on veut donner une latitude encore plus grande pour un même emplacement, on peut prévoir un second ensemble émetteur/récepteur 7′ et 8′, FIG. 6, qui couvrira un champ complémentaire à celui couvert par l'interrupteur 7-8.

On pourra donc, dans un même emplacement, détecter des bouteilles d'un diamètre presque aussi grand que l'emplacement lui-même, et aussi des bouteilles d'un diamètre à peine plus grand que le tiers de la première, coupant toujours au moins l'un des rayons, 27 FIG. 6.

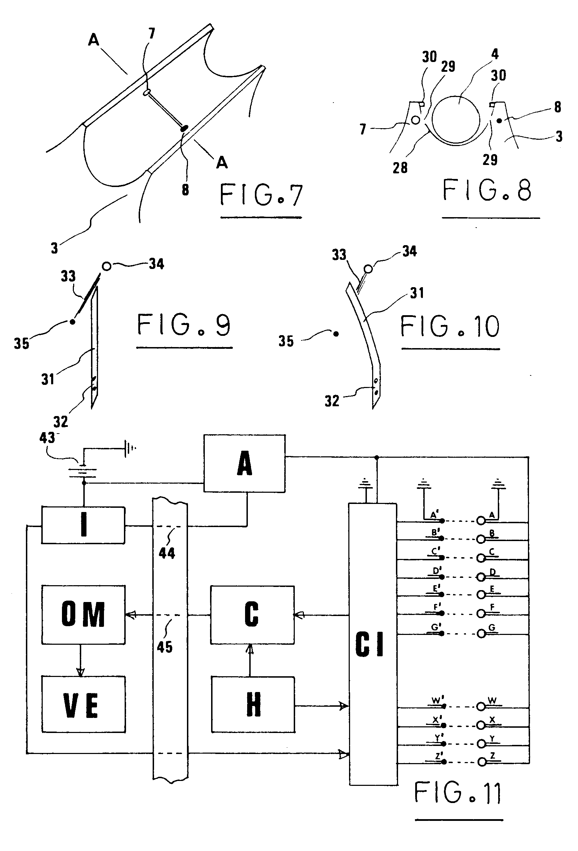

La FIG. 7 donne un agrandissement d'un emplacement 3 de la FIG. I, et la FIG. 8 en est une coupe suivant A-A.

Pour éviter que les émetteurs 7 et les récepteurs 8 ne puissent être abimés par des chocs directs, griffés ou couverts de fragments d'étiquette ou de colle pouvant provenir accidentellement des articles stockés, on prévoit de les monter en retrait des parois 28, et des ouvertures 29 permettent aux rayons de l'émetteur de sortir et d'activer le récepteur uniquement dans l'axe prévus.

Eventuellement des rebords 30, dans le moulage de l'emplacement, pourront contribuer aussi à garder les bouteilles écartées des ouvertures 29 lors de la manipulation de celles-ci.

Les contacteurs optiques pourront éventuellement servir à détecter d'autres paramètres comme par exemple, déterminer si le réfrigérateur est en bon fonctionnement.

La FIG. 9 montre un bilame 3I de 2 épaisseurs de métaux d'un indice de dilatation différent.

Ce bilame est fixé en 32 par exemple dans le casier réservé à la formation des cubes de glace 36 dans l'appareil I.

Les valeurs du bilame sont choisies pour que dans une ambiance non réfrigérée il présente une forme sensiblement rectiligne et n'agisse pas sur les rayons 33 émis par un émetteur 34, activant un récepteur 35, par contre, lorsque le bilame se trouvera dans une ambiance plus froide, les métaux le composant se retracteront différemment et la lame se courbera et viendra couper les rayons 33, FIG. I0.

Il est aussi intéressant de détecter la mauvaise fermeture éventuelle de la porte du réfrigérateur.

En général, le client reçoit une clé spécialement réservée au réfrigérateur, ou, c'est la clé de la chambre qui permet aussi l'accès au réfrigérateur.

Dans la FIG. I on a représenté en 37 une clé pouvant agir sur une patte 38 qui en tournant peut s'engager dans une ouverture 39 et venir agir sur les rayons d'un émetteur 40 et un récepteur 4I.

Lorsque le réfrigérateur sera correctement fermé, la pièce 38 viendra couper les rayons 42 du contacteur optique.

La FIG. II donne un schéma en blocs montrant comment on peut interroger un appareil de vente pour connaître son état et interpréter les renseignements obtenus.

Une source de courant continu 43 alimente une série d'émetteurs infra-rouges A-B-C-D-E-F-G se trouvant dans les emplacements d'un réfrigérateur I.

Les récepteurs correspondants A′-B′-C′-D′-E′-F′-G′ sont raccordés à un circuit intégré CI.

Lorsque une demande de renseignement est désirée, une initiation est envoyée par le circuit I par un fil 44 et permet l'alimentation des émetteurs par le circuit A.

Le circuit I initie en même temps le circuit CI qui, régit par une horloge H, analyse une par une, en séquence, l'état des récepteurs A′-B′-C′-D′-E′-F′-G.

Un circuit de codage C envoie par un fil 45, des informations codées correspondant à un numéro d'ordre d'un emplacement, et détermine si un article interrompt le faisceau de rayons.

Ces informations peuvent être stockées et gardées en mémoire par un circuit OM et/ou interprétées directement par un écran de visualisation ou par un appareil d'écriture, VE.

Lorsque le circuit CI arrive à la fin de son analyse, le circuit A coupe l'alimentation des metteurs.

D'autres émetteurs/récepteurs, identifiés par un codage pourront concerner d'autres paramètres quelconques.

Des emplacements d'articles dans, par exemple, une armoire non réfrigérée, installée dans la même chambre, peuvent être détectés et interprétés par les mêmes circuits, par exemple, des émetteurs W-X-Y-Z et leurs récepteurs correspondants W′-X′-Y′-Z′.

Si on adopte une lecture par 2 émetteurs et 2 récepteurs comme dans la FIG. 6, il faudra prévoir que le circuit CI interprète, dans ces cas, chaque fois une lecture en deux parties, l'une après l'autre afin de pouvoir déterminer si au moins l'un des deux faisceaux de rayons est interrompu.

## Revendications

1. Système d'inventaire d'articles dans des appareils de vente, ayant des moyens pour délimiter des emplacements spécifiques aux différents articles (4, 6), des moyens (7, 8, A-G, A′-G′, W-Z, W′-Z′) pour détecter la présence ou non d'un article dans son emplacement, des moyens pour permettre une certaine latitude de forme et volume d'un article par rapport à un emplacement réservé et des moyens (CI, I) pour pouvoir identifier l'état des emplacements pour le service et/ou la facturation, caractérisé en ce que sont prévues des pièces interchangeables (23, 24) en forme de racks ou de plateaux amovibles permettant une grande flexibilité d'adaptation rapide d'un appareil à d'autres formes d'articles, chaque pièce comprenant un groupe d'emplacements spécifiques, et en ce que les appareils de vente sont des appareils de vente à accès manuel libre, c'est-à-dire permettant à un client de remettre, après l'avoir préalablement enlevé, un article non employé dans son emplacement.

2. Système suivant la revendication I, caractérisé en ce que les moyens prévus pour détecter la présence ou non d'un article dans son emplacement sont réalisés par un contacteur optique composé d'un émetteur de lumière ou de rayons infra-rouges et d'un récepteur sensible à cette longueur d'onde de rayonnement.

3. Systèmes suivant la revendication 2, caractérisé en ce que l'émetteur et le récepteur du contacteur optique sont placés en regard l'un de l'autre, de chaque côté de la paroi qui délimite un emplacement afin que l'article forme écran entre les deux éléments.

4. Système suivant les revendications 2 à 3, caractérisé en ce qu'on prévoit de placer l'émetteur et le récepteur du contacteur optique en retrait des parois qui délimitent l'emplacement, les rayons sortant et rentrant par des ouvertures prévues en regard des éléments du contacteur optique.

5. Système suivant les revendications I à 4, caractérisé en ce que les moyens prévus pour permettre une certaine latitude de formes et volumes d'un article par rapport à un emplacement réservé sont réalisés par un deuxième contacteur optique couvrant un champ complémentaire de celui couvert par le premier émetteur/récepteur.

6. Système suivant les revendications I à 5, caractérisé en ce que les moyens prévus pour permettre une grande flexibilité d'adaptation rapide de l'appareil à d'autres formes d'articles sont réalisés par des pièces moulées en matière plastique en forme de rack ou de plateaux amovibles et comprenant chaque fois un groupe d'emplacements spécifiques.

7. Système suivant les revendications I à 6, caractérisé en ce que les moyens prévus pour pouvoir identifier l'état des emplacements pour le service ou la facturation des articles sont réalisés par un circuit électronique comprenant une alimentation, un circuit d'analyse séquentiel régi par une horloge, un circuit de codage des informations et un circuit de commande permettant d'initier une demande d'analyse de l'état des emplacements ou autres paramètres concernant l'appareil de vente.

8. Système suivant la revendication 7, caractérisé en ce que les circuits électroniques et les émetteurs de lumière ou de rayons infra-rouges ne sont alimentés que pendant le temps nécessaire au traîtement des informations.

9. Système suivant la revendication 7, caractérisé en ce que les informations codées de l'analyse de l'état des emplacements sont stockées dans un circuit de mémoire.

10. Système suivant la revendication 7, caractérisé en ce que les informations codées de l'analyse de l'état des emplacements sont envoyées vers un écran de visualisation.

11. Système suivant la revendication 7, caractérisé en ce que les informations codées de l'analyse de l'état des emplacements sont envoyées vers un appareil d'écriture.

12. Système suivant la revendication 6, caractérisé en ce que des moyens sont prévus sur les pièces moulées et dans les appareils de vente pour que les unes puissent se glisser et se maintenir dans les autres.

13. Système suivant la revendication I, caractérisé en ce ques des moyens du même type que ceux prévus pour identifier l'état des emplacements puissent identifier aussi l'état de fonctionnement de la réfrigération.

14. Système suivant la revendication 13, caractérisé en ce que le fonctionnement de la réfrigération est détecté par un bilame pouvant couper les rayons d'un contacteur optique.

15. Système suivant la revendication I, caractérisé en ce que des moyens du même type que ceux prévus pour identifier l'état des emplacements puissent identifier aussi l'état de la fermeture de la porte du réfrigérateur.

16. Système suivant la revendication 15, caractérisé en ce que l'état de la fermeture de la porte du réfrigérateur est détecté par une partie de la serrure elle-même pouvant couper le faisceau de rayons d'un contacteur optique.

## Patentansprüche

1. Inventarsystem für Gegenstände in Verkaufsautomaten, mit einer Einrichtung für das Feststellen von Plätzen, die für unterschiedliche Gegenstände (4, 6) je spezifisch sind, einer Einrichtung (7, 8, A-G, A′-G′, W-Z, W′-Z′), um das Vorhandensein oder Fehlen eines Gegenstandes an seiner Stelle zu erfassen, mit einer Einrichtung, um eine bestimmte Freiheit in der Form und Größe eines Gegenstandes hinsichtlich einer reservierten Stelle zu erlauben, und mit einer Einrichtung (CI, I), mit welcher der Zustand der Stelle für die Wiederauffüllung und die Rechnungsstellung identifiziert wird, dadurch gekennzeichnet, daß austauschbare Stücke (23, 24) in Form von Rahmen oder austauschbaren Tabletts vorgesehen sind, die eine große Flexibilität bei der schnellen Anpassung einer Vorrichtung an andere Formen der Gegenstände erlauben, wobei jedes Stück eine Gruppe von besonderen Stellen aufweist, und daß die Verkaufsautomaten frei zugänglich sind, das heißt, es erlauben, daß ein Kunde einen ungenutzten Gegenstand an seine Stelle zurückstellt, nachdem er ihn zuvor herausgenommen hat.

2. System nach Anspruch 1, dadurch gekennzeichnet, daß die für die Erfassung der Anwesenheit oder Abwesenheit eines Gegenstandes an seiner Stelle vorgesehene Einrichtung durch einen optischen Schalter realisiert ist, der aus einem Sender für Licht oder infrarote Strahlung und einem Empfänger, der bei dieser Wellenlänge empfindlich ist, zusammengesetzt ist.

3. System nach Anspruch 2, dadurch gekennzeichnet, daß der Sender und der Empfänger des optischen Schalters einander gegenüberliegend auf jeder Seite der Wand angeordnet sind, die eine Stelle derart begrenzt, daß der Gegenstand eine Maske bildet.

4. System nach Anspruch 2 oder 3, dadurch gekennzeichnet, daß es vorgesehen ist, den Sender und den Empfänger des optischen Schalters in einer zurückgezogenen Stellung bezüglich der die Stelle begrenzenden Wand anzuordnen, wobei die Strahlen durch vor den Elementen des optischen Schalters vorgesehenen Öffnungen verlaufen.

5. System nach einem der Ansprüche 1 bis 4, dadurch gekennzeichnet, daß die Einrichtung, die für die Einräumung einer bestimmten Freiheit der Form und der Größe eines Gegenstandes bezüglich einer Stelle vorgesehen ist, durch einen zweiten optischen Schalter realisiert ist, der eine Fläche bedeckt, die zu der durch den ersten Sender/Empfänger abgedeckten komplementär ist.

6. System nach Anspruch 1 bis 5, dadurch gekennzeichnet, daß die Einrichtung, die vorgesehen ist, um eine Flexibilität der schnellen Anpassung einer Form an andere Gegenstandsformen zu ermöglichen, durch in Kunststoff gegossene Stücke in der Form von Rahmen realisiert ist, oder durch austauschbare Tabletts, und welche EInrichtung je eine Gruppe von bestimmten Stellen aufweist.

7. System nach einem der Ansprüche 1 bis 6, dadurch gekennzeichnet, daß die Einrichtung, die vorgesehen ist, um den Zustand der Stellen für die Nachlieferung oder Abrechnung der Gegenstände zu identifizieren, durch einen elektronischen Schaltkreis realisiert ist, der eine Spannungsversorgung, einen sequentiellen Analysatorschaltkreis, der durch einen Takt getaktet wird, einen Informationscodierschaltkreis und einen Steuerkreis aufweist, der eine Anfrage abgeben kann, um den Zustand der Stellen und andere Parameter, die den Verkaufsautomaten betreffen, zu analysieren.

8. System nach Anspruch 7, dadurch gekennzeichnet, daß der Elektronikschaltkreis und die Licht- oder Infrarot-Strahlensender nur während der Zeit mit Energie beaufschlagt werden, die erforderlich ist, um die betreffenden Daten zu verarbeiten.

9. System nach Anspruch 7, dadurch gekennzeichnet, daß die codierten Informationen der Zustandsanalyse der Stellen in einem Speicherschaltkreis abgespeichert sind.

10. System nach Anspruch 7, dadurch gekennzeichnet, daß die codierten Informationen der Zustandsanalyse der Stellen zu dem Bildschirm zur Sichtbarmachung gesendet werden.

11. System nach Anspruch 7, dadurch gekennzeichnet, daß die codierten Informationen der Zustandsanalyse der Stellen zu einer Schreibvorrichtung gesendet werden.

12. System nach Anspruch 6, dadurch gekennzeichnet, daß eine Einrichtung auf den Formstücken und in dem Verkaufsautomaten vorgesehen ist, mit welcher den Formstücken erlaubt wird, aufeinander zu gleiten, und daß sie je in dem betreffenden anderen gehalten werden.

13. System nach Anspruch 1, dadurch gekennzeichnet, daß die Vorrichtung der gleichen Art, wie diejenige, die dafür vorgesehen ist, den Zustand der Stellen zu identifizieren, in der Lage ist, auch den Betriebszustand des Gefrierens zu identifizieren.

14. System nach Anspruch 13, dadurch gekennzeichnet, daß der Betriebszustand durch ein Bimetallelement erfaßt wird, das dazu in der Lage ist, mit den Strahlen eines optischen Schalters zu interferieren.

15. System nach Anspruch 1, dadurch gekennzeichnet, daß die Einrichtung der gleichen Art, wie diejenige, die vorgesehen ist, um den Zustand der Stellen zu bestimmen, auch dazu in der Lage ist, den Verschlußzustand der Tür des Kühlgerätes zu identifizieren.

16. System nach Anspruch 15, dadurch gekennzeichnet, daß der Verschlußzustand der Tür des Kühlgerätes durch einen Teil des Schlosses selbst erfaßt wird, der dazu in der Lage ist, mit den Strahlen eines optischen Schalters zu interferieren.

## Claims

1. Article inventory system in vending machines, having means for delimiting locations specific to different articles (4,6), means (7, 8, A-G, A′-G′, W-Z, W′-Z′) to detect the presence or absence of an article in its location, means to allow a certain freedom of form and volume of an article in relation to a reserved location, and means (CI,I) for identifying the status of the location for the service or for the billing, characterized in that interchangeable pieces (23, 24) in the form of racks or exchangeable trays are provided, allowing a great flexibility of rapid adaption of an apparatus to other article forms, with each piece having a group of specific locations, and that the vending machines are free-access vending machines, i.e., allowing a customer to put back an unused article to its location, after having taken it out previously.

2. A system according to claim 1, characterized in that the means provided to detect the presence or absence of an article in its location are realized by an optical switch composed of a light emitter or infra-red ray emitter and of a receiver sensible at that wavelength.

3. A system according to claim 2, characterized in that the emitter and the receiver of the optical switch are placed facing each other, on each side of the wall delimiting a location such that the article forms a screen between the elements.

4. A system according to claims 2 or 3, characterized in that it is provided to place the emitter and the receiver of the opitcal switch in a retracted position of the walls delimiting the location, with the rays passing through openings provided in front of the optical switch elements.

5. A system according to claims 1 to 4, characterized in that the means provided to allow a certain freedom of form and volume of an article in relation to a location are realized by a second optical switch covering a complementary area to the one covered by the first emitter/receiver.

6. A system according to claims 1 to 5, characterized in that the means provided to allow a great flexibility of rapid adaption of an apparatus to other article forms are realized by pieces moulded in plastic in the form of racks, or interchangeable trays, and comprising a group of specific locations each time.

7. A system according to claims 1 to 6, characterized in that means provided to identify the status of the locations for servicing or billing the articles are realized by an electronic circuit comprising a power supply, a sequential analyzer circuit timed by a clock, an information coding circuit and a control circuit allowing to initiate a demand for analyzing the status of the locations and other parameters concerning the vending machine.

8. A system according to claim 7, characterized in that the electronic circuit and the light or infrared ray emitters are energized only during the time neccessary to process the respective data.

9. A system according to claim 7, characterized in that the coded information of the status analysis of the locations is stored in a memory circuit.

10. A system according to claim 7, characterized in that the coded information of the status analysis of the locations is sent to the visualizing screen.

11. A system according to claim 7, characterized in that the coded information of the status analysis of the locations is sent to a writing apparatus.

12. A system according to claim 6, characterized in that means are provided on the moulded pieces and in the vending machine for allowing the moulded pieces to slide on each other and to maintain themselves in the other ones.

13. A system according to claim 1, characterized in that means of the same type as those provided to identify the status of the locations are able to identify also the operating status of refrigeration.

14. A system according to claim 13, characterized in that the operating status is detected by a bimetallic element which is able to interfere with the rays of an optical switch.

15. A system according to claim 1, characterized in that means of the same type as those provided to identify the status of the locations are also able to identify the locking status of the refrigerator door.

16. A system according to claim 15, characterized in that the locking status of the refrigerator door is detected by a part of the lock itself which is able to interfere with the rays of an optical switch.
